# EUROPÄISCHE PATENTSCHRIFT

(11) **EP 0 523 546 B1**
(45) Veröffentlichungstag und Bekanntmachung des Hinweises auf die Patenterteilung: **10.03.1999**
(21) Anmeldenummer: 92111662.0
(22) Anmeldetag: 09.07.1992
(51) Int. Cl.: D03D 1/02, B60R 21/16

(54) **Technische Gewebe mit gezielt eingestellter Luftdurchlässigkeit und hoher Alterungsbeständigkeit sowie Verfahren zu deren Herstellung**
Technical woven fabric with adjusted air permeability and high ageing resistance and process for its manufacture
Tissu technique avec perméabilité à l'air réglée et grande résistance au vieilissement ainsi que procédé pour sa fabrication

(30) Priorität: 16.07.1991 DE 4123537; 13.06.1992 DE 4219386
(43) Veröffentlichungstag der Anmeldung: 20.01.1993
(73) Patentinhaber: Akzo Nobel N.V., 6824 BM Arnhem (NL)
(72) Erfinder: Krummheuer, Wolf Rüdiger, Dr., W-5600 Wuppertal 1 (DE); Siejak, Volker, W-4100 Duisburg 1 (DE); Graefe, Hans Albert, W-5830 Schwelm (DE)
(74) Vertreter: Fett, Günter

(56) Entgegenhaltungen:
- EP-A- 0 336 507
- EP-A- 0 416 483
- EP-A- 0 436 950
- CA-A- 974 745

## Beschreibung

Die Erfindung betrifft ein Verfahren zur Herstellung von Technischen Geweben mit sehr guter Alterungsbeständigkeit und gezielt eingestellter Luftdurchlässigkeit in einem Bereich < 120 l/dm²•min, gemessen bei 500 Pa Prüfdifferenzdruck, ein nach diesem Verfahren hergestelltes Technisches Gewebe, sowie dessen Verwendung.

Für zahlreiche Einsatzgebiete von Technischen Geweben ist eine gezielt eingestellte Luftdurchlässigkeit von ausschlaggebender Bedeutung. Als Beispiele hierfür seien Gewebe an der Unterseite von Fallschirmen, Gewebe für die Gasfiltration, Gewebe zur Herstellung von Sprungkissen etc. genannt.

In besonderem Maße gilt dies für Airbaggewebe. Airbags bestehen üblicherweise aus zwei Geweben mit unterschiedlichen Luftdurchlässigkeiten. Für den Kontaktteil, der beim Auslösen der Airbagfunktion dem Fahrzeuginsassen zugewandt ist, wird eine extrem niedrige Luftdurchlässigkeit von < 10 l/dm²•min bei 500 Pa Prüfdifferenzdruck verlangt. Gegen dieses Gewebe strömt das von einem Generator erzeugte Gas und bläst den Airbag auf.

Ein sanftes Auffangen des Fahrzeuginsassen im Falle einer Kollision des Fahrzeugs ist aber nur möglich, wenn die Voraussetzung geschaffen wird, daß ein Teil des Gases beim Aufprallen des Fahrzeuginsassen aus den Airbag entweichen kann. Aus diesem Grunde werden für Airbags entweder einstückig hergestellte Gewebe mit unterschiedlicher Luftdurchlässigkeit eingesetzt oder es werden zwei Gewebe, deren Luftdurchlässigkeiten gezielt unterschiedlich eingestellt werden, miteinander vernäht. Solche Airbags bestehen dann aus dem oben erwähnten sogenannten Kontaktgewebe mit sehr niedriger Luftdurchlässigkeit und einem sogenannten Filtergewebe mit wesentlich höherer Luftdurchlässigkeit, das ein gezieltes dosiertes Austreten des Generatorgases ermöglicht. Das Filtergewebe ist üblicherweise an den Seitenteilen des Airbags angebracht. Für das Filtergewebe werden Luftdurchlässigkeiten von 20 - 120 l/dm²•min, gemessen bei 500 Pa Prüfdifferenzdruck, gefordert.

Für alle Materialien, die zum Schutz von Menschen vor Verletzungen dienen, ist es eine unumgängliche Forderung, daß einmal eingestellte Eigenschaften dieser Materialien über längere Zeit erhalten bleiben und sich auch unter Extrembedingungen nicht ändern. Diese Forderung muß in besonderem Maße für Airbags, die dem Schutz der Fahrzeuginsassen bei einem Unfall dienen, erhoben werden. So muß die einmal eingestellte Luftdurchlässigkeit sowohl des Kontaktals auch des Filtergewebes von Airbags unverändert erhalten bleiben, wenn zu jeder Zeit und auch nach längerer Betriebsdauer eines Fahrzeugs ein Schutz der Insassen bei einem Unfall gewährleistet werden soll. Für die über lange Zeit und auch unter Extrembedingungen unverändert bleibende Luftdurchlässigkeit wird normalerweise der Ausdruck Alterungsbeständigkeit gebraucht.

Wie für Filtergewebe für Airbags muß die Forderung nach optimaler Alterungsbeständigkeit auch für andere Technische Gewebe mit gezielt eingestellter Luftdurchlässigkeit, besonders wenn sie dem Schutz von Menschen dienen, erhoben werden. Für die oben erwähnten Gewebe für Fallschirme, für Sprungkissen etc. ist diese Forderung somit ebenfalls unumgänglich.

Für die Herstellung von Kontaktgeweben für Airbags sowie für andere Technische Gewebe, die ähnlichen Forderungen bezüglich einer niedrigen Luftdurchlässigkeit unterliegen, wurde in der CA-A 2 034 067 ein Verfahren beschrieben, das die Einstellung der geforderten niedrigen Luftdurchlässigkeit ermöglicht. Für Filtergewebe für Airbags, für die im Vergleich zu den Kontaktgeweben eine deutlich höhere Luftdurchlässigkeit notwendig ist, kann dieses Verfahren auch Anwendung finden. Welche Verfahrensparameter zu beachten sind, um eine gute Alterungsbeständigkeit der eingestellten Luftdurchlässigkeit unter Testbedingungen mit einer Temperaturzyklusbehandlung in einem Temperaturbereich zwischen -35 °C und +105 °C sowie einer Luftfeuchtigkeitszyklusbehandlung zwischen 30 und 95 % relativer Luftfeuchtigkeit zu gewährleisten, wird in dieser Patentanmeldung nicht offenbart. Das in CA-A 2 034 067 beschriebene Verfahren ist nur für Gewebe aus Polyamid-Garnen geeignet.

In EP-A 416 483 wird ein Airbaggewebe mit einer niedrigen Luftdurchlässigkeit beschrieben, diese wird nach einer Thermofixierung, z.B. auf einem Spannrahmen, durch ein Kalandrier- oder Sanforisierverfahren eingestellt. Eine Lehre, wie Technische Gewebe mit guter Alterungsbeständigkeit erhalten werden, wird hier nicht gegeben.

Deshalb bestand die Aufgabe, ein gattungsgemäßes Technisches Gewebe, mit dem die Sicherheit der dieses benutzenden Personen erhöht wird sowie ein Verfahren zu seiner Herstellung zur Verfügung zu stellen. Diese Aufgabe wird durch ein Verfahren gemäß Anspruch 1 gelöst.

Überraschend wurde nun gefunden, daß Technische Gewebe mit gezielt eingestellter Luftdurchlässigkeit bei optimaler Alterungsbeständigkeit dann hergestellt werden können, wenn die Produktionsbedingungen in der Weberei, in der Naßausrüstung sowie beim Trocknen genau aufeinander abgestimmt und vor allem die Abkühl- und Aufwickelbedingungen nach dem Trocknen sehr genau beachtet werden, wie dies nachfolgend beschrieben wird.

Für die Herstellung von Airbaggeweben und anderen Technischen Geweben mit gezielt eingestellter Luftdurchlässigkeit finden häufig Polyamidfasern in Form von Filamentgarnen Einsatz. Als besonders günstig hat sich Polyamid 6.6 erwiesen. Aber auch andere Synthesefasern wie Polyesterfasern haben sich in diesem Einsatzgebiet sehr gut bewährt.

Für Technische Gewebe haben sich Garntiter von 230-940 dtex als gut geeignet erwiesen. Besonders für Airbags finden Titer von 235, 350 und 470 dtex Verwendung. Die Zahl der Einzelfilamente kann zum Beispiel beim Titer 235 dtex 36, bei 350 oder 470 dtex 72 sein.

Das für die Gewebeherstellung eingesetzte Polyamid-Garn weist darüberhinaus vorzugsweise eine Festigkeit von mindestens 60 cN/tex und eine Dehnung von 15 - 30 % auf. Polyestergarne für dieses Einsatzgebiet haben, ebenfalls bei einer Festigkeit von mindestens 60 cN/tex, eine Dehnung von 10 - 25 %.

Im Schrumpf unterscheiden sich die für Kontakt- und Filtergewebe eingesetzten Polyamidgarne. Während für die Herstellung von Filtergeweben Garne mit einem Heißluftschrumpf von 2 - 4 % (gemessen bei 190 °C) zum Einsatz kommen, werden Kontaktgewebe aus Garnen mit einem Heißluftschrumpf von 7 - 10 % (gemessen bei 190 °C) eingesetzt. Der Unterschied in den Schrumpfwerten ergibt sich aus den unterschiedlichen Luftdurchlässigkeits-Anforderungen für Filter- und Kontaktgewebe. Für die bei Kontaktgeweben niedrige Luftdurchlässigkeit ist ein dichteres Gewebe und damit eine stärkere Schrumpfauslösung bei der Naßbehandlung nötig, wofür ein höherer Ausgangsschrumpfwert erforderlich ist.

Bei der Verwendung von Polyester-Filamentgarnen für die Herstellung von Airbaggeweben liegen die entsprechenden Heißluftschrumpfwerte bei 1 - 4 % (gemessen bei 190 °C) für Filtergewebe und bei 5 - 9 % (gemessen bei 190 °C) für Kontaktgewebe.

Im Interesse einer gezielt eingestellten Luftdurchlässigkeit muß beim Weben die Fadenzahl in Kette und Schuß genau auf den Garntiter abgestimmt werden. So wird bei Einsatz eines Garntiters von 470 dtex mit 72 Einzelfilamenten (470 f 72) bei einem Polyamid 6.6-Garn mit einem Heißluftschrumpf von 2 - 4 % (gemessen bei 190 °C) mit einer Fadenzahl von 16/cm in Kette und Schuß in Leinwandbindung bei Einhaltung der weiter unten beschriebenen Bedingungen in der Naßausrüstung sowie beim Trocknen eine Luftdurchlässigkeit von ca. 80 l/dm²•min, gemessen bei 500 Pa Prüfdifferenzdruck, im fertig ausgerüsteten Gewebe erzielt. Werden die Fadenzahlen bei dem genannten Titer auf 19/cm in Kette und Schuß erhöht, so wird, eine Einhaltung der weiter unten beschriebenen Bedingungen vorausgesetzt, eine Luftdurchlässigkeit von ca. 30 l/dm²•min, gemessen bei 500 Pa Prüfdifferenzdruck, erhalten. Findet ein Titer von 235 dtex mit 36 Einzelfilamenten (235 f 36) Anwendung, so beträgt die Luftdurchlässigkeit des fertig ausgerüsteten Gewebes ca. 40 l/dm²•min, gemessen bei 500 Pa Prüfdifferenzdruck, wenn mit Fadenzahlen von 26/cm in Kette und Schuß gearbeitet wurde. Alle genannten Angaben beziehen sich auf den Einsatz von Polyamid 6.6 - Garnen mit einem Heißluftschrumpf von 2 - 4 % (gemessen bei 190 °C).

Die Gewebe werden bevorzugt in Leinwandbindung mit symmetrischer Einstellung hergestellt. Für feinere Titer kann, im Interesse eines ansprechenden Warengriffes, auch eine Panamabindung 2/2 in symmetrischer Einstellung gewählt werden. Für Airbag-Filtergewebe mit höherer Luftdurchlässigkeit können von der Leinwandbindung abweichende Bindungen, die zu einer besseren Nahtschiebefestigkeit führen, vorteilhaft sein. Als Beispiele seien hierfür Kreuzköper-, Panama- oder Kreppbindungen genannt.

Symmetrische Gewebeeinstellung heißt, daß Kette und Schuß wenigstens im wesentlichen gleiche Fadenzahlen aufweisen, wobei die Kettfäden und die Schußfäden zumindestens annähernd die gleichen textilen Eigenschaften wie Titer, Festigkeit, Bruchdehnung und Heißluftschrumpf aufweisen. Die symmetrische Einstellung des Gewebes gestattet es, die Forderung nach in Kette und Schuß gleichen Festigkeiten auf einfache Weise zu erfüllen. Diese Forderung wird besonders von den Automobilherstellern bei Airbags erhoben, da es sich beim Airbag um ein radialsymmetrisches Bauteil ohne Vorzugsrichtung handelt.

Das nach den genannten Bedingungen in der Weberei hergestellte Gewebe wird einer Behandlung in einem wäßrigen Bad bei 60 - 140 °C unterzogen. Hierbei erfolgt eine Schrumpfauslösung, die zu einer Verdichtung des Gewebes führt.

Für die Behandlung im wäßrigen Bad wird ein Temperaturbereich von 90 - 100 °C bevorzugt, da sich dieser Temperaturbereich im Hinblick auf die gezielt eingestellte Luftdurchlässigkeit als sehr günstig erwiesen hat. Besonders bevorzugt wird eine Behandlungstemperatur von 95 °C. Die hier als bevorzugt genannten Temperaturen bieten den Vorteil, daß bezüglich der Maschinenauswahl für die Naßpassage geringere Beschränkungen bestehen als bei Temperaturen über 100 °C.

Die Behandlung im wäßrigen Bad kann beispielsweise auf allen, für die Breitwäsche in der Textilveredlung zur Verfügung stehenden Maschinen erfolgen. Als günstig haben sich Breitwaschmaschinen erwiesen. Aber auch Jigger sind für derartige Behandlungen geeignet.

Wenn bei Temperaturen über 100 °C gearbeitet wird, so kommt hierfür als Maschine der HT-Jigger in Frage. Hier sind Behandlungstemperaturen bis 140 °C möglich.

Diese Naßbehandlung bewirkt gleichzeitig auch das Entfernen von gegebenenfalls vor dem Weben aufgebrachter Schlichte. Dies ist vorteilhaft, um bei dem teilweise sehr langen Lagern der Gewebe, z.B. von Airbags im Lenkrad eines Fahrzeugs, den Bakterienbefall der Gewebe zu vermeiden.

Auch bei Verwendung von gedrehten Garnen in der Kette, die normalerweise ungeschlichtet zum Einsatz gelangen, bewirkt die Behandlung im wäßrigen Bad gleichzeitig die Entfernung der von der Faserherstellung auf dem Garn gegebenenfalls vorhandenen Präparation.

Die angegebenen Behandlungstemperaturen gelten sowohl für Gewebe aus Polyamid-Garnen als auch für Gewebe aus Polyester-Garnen.

Die bei der Naßpassage zu wählende Behandlungszeit sowie eventuelle Zusätze zum Bad richten sich nach der zu entfernenden Schlichte bzw. Präparation und sind dem Fachmann bekannt.

Bei der Verwendung von Polyester-Garnen mit den obengenannten Eigenschaften ist eine ausreichende Schrumpfauslösung und Gewebeverdichtung durch das beschriebene Naßverfahren nicht möglich. Bei Geweben aus Polyester-Garnen muß eine zusätzliche Schrumpfauslösung durch eine Heißluft-Behandlung erfolgen.

Hier besteht ein grundlegender Unterschied zwischen der weiteren Behandlung von Geweben aus Polyamidgarnen und aus Polyestergarnen nach der Naßpassage. Während bei Geweben aus Polyamid-Garnen durch die Naßbehandlung eine für die Einstellung der gewünschten Luftdurchlässigkeit ausreichende Schrumpfauslösung und damit Gewebedichte erreicht wird, ist bei Geweben aus Polyester-Garnen hierfür eine zusätzliche Heißluftbehandlung nötig.

Die nachfolgenden Ausführungen zur Heißluftbehandlung beziehen sich auf Gewebe aus Polyamid-Garnen. Bei Geweben aus Polyester-Garnen sind andere Bedingungen bei der Heißluftbehandlung zu beachten, die noch im einzelnen beschrieben werden.

Nach der Naßbehandlung sollte ohne längere Lagerzeit die Trocknung der Gewebe aus Polyamid-Garnen vorgenommen werden.

Diese wird bevorzugt auf einem Spannrahmen durchgeführt. Das Gewebe muß hierbei mit einer Voreilung von 3 - 5 % in den Spannrahmen eingefahren werden.

Von ausschlaggebender Bedeutung ist die Trocknungstemperatur. Diese darf 150 °C nicht übersteigen. Als günstig haben sich Temperaturen von 140 - 150 °C erwiesen. Höhere Temperaturen beim Trocknen können ein Thermofixieren des Gewebes und, damit einhergehend, einen Rückgang der Luftdurchlässigkeit bewirken. Ein gezieltes Einstellen dieser für viele Technische Gewebe sehr wichtigen Eigenschaft ist dann nicht mehr gewährleistet.

Das Trocknen wird bevorzugt auf einem Spannrahmen durchgeführt. Die Warengeschwindigkeit wird so eingestellt, daß eine Verweilzeit von ca. 80 sec im Spannrahmen erreicht wird. Die Voreilung am Spannrahmeneinlauf beträgt 3.5 %. Nach dem Verlassen des Spannrahmens muß langsam abgekühlt werden. Das am Spannrahmenausgang häufig installierte Kühlgebläse darf hierbei nicht betätigt werden. Um ein möglichst langsames Abkühlen zu gewährleisten, wird das aus dem Spannrahmen auslaufende Gewebe über hintereinander angeordnete Tänzerwalzen gefahren und so langsam auf Raumtemperatur abgekühlt.

Nach dieser Kühlpassage muß die Feuchtigkeit des Gewebes bei ca. 5 % liegen.

Wichtig ist, daß das Aufwickeln des Gewebes hinter dem Spannrahmen bei niedriger Spannung vorgenomen wird. Als günstig hat sich bei den durchgeführten Versuchen ein Spannungsbereich von 150 - 300 N/m Gewebebreite erwiesen.

Mit diesen Produktionsbedingungen wird ein Gewebe erhalten, das seine Luftdurchlässigkeit auch unter Extrembedingungen unverändert behält, also optimal alterungsbeständig ist.

Bei Geweben aus Polyester-Garnen wird die Naßbehandlung in der gleichen Weise wie bei Geweben aus Polyamid-Garnen durchgeführt. Danach folgt bei Geweben aus Polyester-Garnen eine Trocknerpassage, zum Beispiel auf einem Zylindertrockner oder Siebtrommeltrockner bei 150 °C. Nach dem Trocknen wird auf dem Spannrahmen fixiert, wobei eine Temperatur von 190 °C eingestellt wird. Die Voreilung beträgt beträgt beim Einfahren in den Spannrahmen ca. 3 %.

Für die Bedingungen beim Abkühlen gilt das bei Geweben aus Polyamid-Garnen Gesagte, wobei allerdings diese Bedingungen sich bei Polyester-Geweben nicht so stark auf die Alterungsbeständigkeit auswirken wie bei Polyamid-Geweben.

Die Alterungsbeständigkeit wurde in Anlehnung an die bei den Automobilherstellern übliche Simulation von Extrembedingungen untersucht. Hierzu wurden die Gewebe in der ersten Stufe zunächst 100 Stunden einer Temperatur von 105 °C ausgesetzt. Anschließend wurden diese Gewebe über eine Zeit von 168 Stunden einer Temperaturzyklusbehandlung unterzogen (2. Stufe). Hierzu wurde zunächst 6 Stunden bei 105 °C gelagert, danach erfolgte während einer Stunde ein Abkühlen auf -35 °C. Dieser Temperatur wurde das Gewebe weitere 6 Stunden ausgesetzt. Danach wurde wieder während einer Stunde auf 105 °C aufgeheizt und bei dieser Temperatur 6 Stunden gelagert. Die zweite Stufe dauerte in dem genannten Rhythmus mit Wechseln zwischen sehr hohen und sehr niedrigen Temperaturen insgesamt 168 Stunden. In der dritten Stufe wurde dann weitere 168 Stunden bei unterschiedlichen Temperaturen und Luftfeuchtigkeiten gelagert. Bei diesem Zyklus wurde das Gewebe zunächst einer Temperatur von 70 °C bei 95 % relativer Luftfeuchtigkeit während einer Behandlungszeit von 6 Stunden ausgesetzt. Anschließend wurde während einer Stunde auf eine Temperatur von 20 °C bei einer relativen Luftfeuchtigkeit von 30 % übergeführt. Auch bei diesen Bedingungen erfolgte eine 6 Stunden dauernde Lagerung. Dann wurde wieder während einer Stunde auf eine Temperatur von 70 °C bei 95 % relativer Luftfeuchtigkeit übergeführt und hier wieder 6 Stunden gelagert und anschließend der Behandlungsrhythmus in der beschriebenen Weise fortgesetzt. Auch in der dritten Behandlungsstufe betrug die Gesamtbehandlungszeit in dem genannten Rhythmus 168 Stunden.

Die Messung der Luftdurchlässigkeit erfolgte zur Beurteilung der Alterungsbeständigkeit nach einer zwei Wochen dauernden Lagerung im Normklima (22 °C, 65 % relative Luftfeuchtigkeit).

Die Prüfung der Luftdurchlässigkeit wurde in Anlehnung an DIN 53 887 vorgenommen. In Abweichung von dieser DIN-Norm wurde lediglich der Prüfdifferenzdruck auf 500 Pa erhöht, um auch bei niedrigen Luftdurchlässigkeiten noch ein eindeutiges Prüfsignal erhalten zu können.

Wie die nachfolgende Tabelle zeigt, bleibt die Luftdurchlässigkeit der erfindungsgemäß hergestellten Technischen Gewebe auch nach den beschriebenen extremen Alterungsbedingungen unverändert erhalten. Wie aus der Tabelle hervorgeht, weicht die Luftdurchlässigkeit bei diesen extremen Testbedingungen um nicht mehr als 15 % vom Ausgangswert ab, was für Gewebe mit einem relativ hohem Ausgangsniveau der Luftdurchlässigkeit in gleicher Weise gilt wie für Gewebe mit mittlerem oder niedrigem Ausgangsniveau. Dies bedeutet, daß das beschriebene Verfahren für die Herstellung von Airbag-Filtergeweben in gleicher Weise geeignet ist wie für die Herstellung von Airbag-Kontaktgeweben. Diese beiden Gewebearten unterschieden sich in den geforderten Werten für die Luftdurchlässigkeit.

| | **Luftdurchlässigkeit in l/dm**^{**2**}**•min** | |
|---|---|---|
| | sofort nach Herstellung | nach Lagerung im Normklima |
| Versuch 1 | 107 | 110 |
| Versuch 2 | 96 | 97 |
| Versuch 3 | 70 | 72 |
| Versuch 4 | 93 | 93 |
| Versuch 5 | 33,8 | 37,2 |
| Versuch 6 | 56,8 | 59,6 |
| Versuch 7 | 6,4 | 6,6 |
| Versuch 8 | 4,6 | 4,9 |

Die Versuche wurden mit Polyamid 6.6-Filamentgarn durchgeführt. Der Garntiter war 470 f 72 (470 dtex, 72 Einzelfilamente). Lediglich bei Versuch 8 kam ein Garntiter 350 f 72 zum Einsatz. Der Schrumpfwert (Heißluftschrumpf, gemessen bei 190 °C) lag bei dem für die Versuche 1 - 6 eingesetztem Garn bei 3,2 %, die verschiedenen Ausgangsniveaus der Luftdurchlässigkeiten wurden durch Variation der Fadenzahlen und der Gewebebindung bei der Gewebeherstellung eingestellt. Bei dem Garn für Versuch 7 lag der Schrumpfwert bei 8,2 %, bei dem Garn für Versuch 8 bei 8,7 % (jeweils gemessen bei 190 °C).

Bei den erfindungsgemäß hergestellten Technischen Geweben bleiben also gezielt eingestellte Luftdurchlässigkeiten auch nach Alterungsprüfungen unter Extrembedingungen unverändert erhalten. Die erfindungsgemäß hergestellten Technischen Gewebe sind somit vor allem bei Artikeln, die zum Schutz von Menschen dienen und die einmal eingestellten Bedingungen unverändert behalten müssen, von ganz entscheidender Bedeutung.

Dies gilt in besonderem Maße für Airbags. Der Einsatz der erfindungsgemäß hergestellten Gewebe im Filterteil eines Airbags gewährleistet, daß die Luftdurchlässigkeit des Filtergewebes auch nach langer Lagerzeit, z.B. im Lenkrad eines Fahrzeugs, unverändert erhalten bleibt und somit auch nach mehreren Jahren Betriebsdauer beim Auslösen der Airbagfunktion ein kontrolliertes Abfließen des vom Generator erzeugten Gases möglich ist.

Ein Airbag-System, das einen Airbag mit einem Filterteil und einem Kontaktgewebe oder mindestens einen von diesen Teilen aus dem erfindungsgemäß hergestellten Gewebe enthält, bietet somit die Möglichkeit eines sicheren Auffangens der Kraftfahrzeuginsassen im Falle eines Aufpralls. Dies gewährleistet ein solches Airbag-System auch noch nach mehrjähriger Betriebsdauer eines Kraftfahrzeuges. Ein Airbag-System, das einen Airbag mit einem Filterteil und einen Kontaktteil aus dem erfindungsgemäß hergestellten Gewebe enthält, bietet also ein hohes Maß an Sicherheit für die Fahrzeuginsassen, womit ein deutlicher Fortschritt gegenüber bisher üblichen Systemen erzielt wurde.

Unter Airbag-System ist der Airbag selbst, die Unterbringung des Airbags im Kraftfahrzeug sowie das Steuerungssystem zum Auslösen der Airbagfunktion zu verstehen.

### Beispiel 1

Dieses Beispiel zeigt die Herstellung eines alterungsbeständigen Gewebes mit relativ hoher Luftdurchlässigkeit, wie sie bei Filtergeweben für Airbags gefordert wird.

Polyamid 6.6-Filamentgarn mit einem Titer 470 f 72 wurde in Leinwandbindung zu einem Gewebe verarbeitet. Das eingesetzte Garn hatte einen Heißluftschrumpf von 3.4 % (gemessen bei 190 °C). Die Fadenzahl betrug sowohl in der Kette als auch im Schuß 16/cm.

Das so hergestellte Gewebe wurde anschließend einer Naßbehandlung auf einem Jigger bei 95 °C unterzogen. Auf dem Jigger wurden sechs Behandlungspassagen gefahren.

Die Kaule des auf dem Jigger behandelten aufgewickelten Gewebes wurde einem Spannrahmen vorgelegt und in diesen mit 4 % Voreilung eingefahren. Die Trocknungstemperatur betrug 150 °C.

Das den Spannrahmen verlassende Gewebe wurde langsam, ohne Betätigung des Kühlgebläses am Spannrahmenausgang, durch Fahren über Tänzerwalzen auf Raumtemperatur (ca. 25 °C) abgekühlt und mit geringer Spannung aufgewickelt. Die Restfeuchtigkeit des getrockneten Gewebes lag bei 4.7 %.

Das so hergestellte Gewebe zeigte eine Luftdurchlässigkeit von 78 l/dm²•min bei 500 Pa Prüfdifferenzdruck.

Anschließend wurde das Gewebe dem beschriebenen dreistufigen Alterungsprozeß unterzogen und dann im Normklima gelagert. Die Luftdurchlässigkeit betrug nach dieser Behandlung 82 l/dm²•min, gemessen bei 500 Pa Prüfdifferenzdruck.

### Beispiel 2

Beispiel 1 wurde mit demselben Ausgangsgarn wiederholt, wobei zur Einstellung einer geringeren Luftdurchlässigkeit mit einer höheren Fadenzahl pro cm gearbeitet wurde. Diese betrug in Kette und Schuß 18/cm. Die anderen Herstellungsbedingungen blieben unverändert.

Hierbei wurde ein Gewebe mit einer Luftdurchlässigkeit von 42 l/dm²•min, erhalten. Nach dem Alterungstest mit nachfolgender Klimatisierung lag die Luftdurchlässigkeit bei 44 l/dm²•min. Die genannten Meßergebnisse wurden bei 500 Pa Prüfdifferenzdruck ermittelt.

Auch die anderen Daten des Gewebes blieben bei dem Alterungstest weitgehend unverändert, wie die nachstehende Tabelle zeigt. Lediglich bei der Weiterreißfestigkeit wird ein geringer Rückgang festgestellt.

| | Ausgangswert | Nach Alterung und Klimatisierung |
|---|---|---|
| Fadenzahl/cm | | |
| Kette | 18,5 | 18,4 |
| Schuß | 18,0 | 18,0 |
| | | |
| Flächengewicht | | |
| g/m² | 188,1 | 184,8 |
| | | |
| Gewebedicke mm | 0,304 | 0,303 |
| | | |
| Höchstzugkraft N | | |
| Kette | 2776 | 2810 |
| Schuß | 2755 | 2779 |
| | | |
| Höchstzugkraftdehnung % | | |
| Kette | 32,5 | 33,1 |
| Schuß | 33,8 | 34,8 |
| | | |
| Weiterreißfestigkeit N (Trapezmethode) | | |
| Kette | 427,6 | 405,1 |
| Schuß | 431,7 | 396,2 |

### Beispiel 3

Beispiel 1 wurde mit demselben Ausgangsgarn wiederholt. An Stelle der Leinwandbindung von Beispiel 1 wurde hier eine Köperbindung 2/2 gewählt. Die Fadenzahlen wurden mit 21/cm eingestellt. Die anderen Herstellungsbedingungen blieben unverändert.

Hierbei wurde ein Gewebe mit einer Luftdurchlässigkeit von 57 l/dm²·min erhalten. Nach dem Alterungstest und nach der Klimatisierung lag die Luftdurchlässigkeit bei 60 l/dm²•min. Die genannten Meßergebnisse wurden jeweils bei 500 Pa Prüfdifferenzdruck ermittelt.

Auch hier blieben die restlichen Gewebedaten, mit Ausnahme des bereits weiter oben erwähnten geringen Rückgangs der Weiterreißfestigkeit, unverändert, wie die nachstehende Tabelle zeigt:

| | Ausgangswert | Nach Alterung und Klimatisierung |
|---|---|---|
| Fadenzahl/cm | | |
| Kette | 20,8 | 21,2 |
| Schuß | 21,2 | 21,5 |
| | | |
| Flächengewicht | | |
| g/m² | 214,3 | 213,7 |
| | | |
| Gewebedicke mm | 0,382 | 0,389 |
| | | |
| Höchstzugkraft N | | |
| Kette | 3138 | 3167 |
| Schuß | 3188 | 3218 |
| | | |
| Höchstzugkraftdehnung % | | |
| Kette | 32,6 | 34,3 |
| Schuß | 31,7 | 32,6 |
| | | |
| Weiterreißfestigkeit N (Trapezmethode) | | |
| Kette | 613,1 | 534,6 |
| Schuß | 541,9 | 461,7 |

Die Beispiele 2 und 3 zeigen daß unabhängig von der über die Fadenzahl eingestellten Gewebedichte und unabhängig von der Gewebebindung mit dem erfindungsgemäßen Verfahren Gewebe erzeugt werden können, deren Luftdurchlässigkeit sich auch bei einem Test unter Extrembedingungen nur unwesentlich ändert und daß auch die restlichen Gewebedaten nach diesem Alterungstest weitgehend unverändert bleiben.

### Beispiel 4

Mit diesem Beispiel soll gezeigt werden, daß das erfindungsgemäße Verfahren auch für die Herstellung von Geweben mit einem sehr niedrigem Ausgangswert in der Luftdurchlässigkeit gut geeignet ist und daß es für die Herstellung von Kontaktgeweben für Airbags in gleicher Weise zum Einsatz kommen kann wie für die Herstellung von Filtergeweben für Airbags.

Abweichend von Beispiel 1 erfolgte hier der Einsatz eines höher schrumpfenden Garnes mit einem Heißluftschrumpf von 7,2 % (gemessen bei 190 °C). Außerdem wurde mit 22/cm eine höhere Fadenzahl eingestellt. Beide Maßnahmen dienten dazu, ein dichteres Gewebe und damit eine geringere Luftdurchlässigkeit zu erhalten. Die restlichen Verfahrensdaten entsprachen denen von Beispiel 1.

Hierbei wurde ein Gewebe mit einer Luftdurchlässigkeit von 6,4 l/dm²·min erhalten. Nach dem Alterungstest und nach der Klimatisierung lag die Luftdurchlässigkeit bei 6,6 l/dm²·min. Alle genannten Werte wurden bei 500 Pa Prüfdifferenzdruck ermittelt.

Bezüglich der restlichen Gewebedaten ergibt sich ein ähnliches Bild wie bei den anderen Versuchen:

| | Ausgangswert | Nach Alterung und Klimatisierung |
|---|---|---|
| Fadenzahl/cm | | |
| Kette | 22,2 | 22,3 |
| Schuß | 21,7 | 21,7 |
| | | |
| Flächengewicht | | |
| g/m² | 246,1 | 245,1 |
| | | |
| Gewebedicke mm | 0,384 | 0,381 |
| | | |
| Höchstzugkraft N | | |
| Kette | 3222 | 3154 |
| Schuß | 2832 | 2722 |
| | | |
| Höchstzugkraftdehnung % | | |
| Kette | 46,0 | 43,6 |
| Schuß | 31,9 | 30,6 |
| | | |
| Weiterreißfestigkeit N (Trapezmethode) | | |
| Kette | 436,6 | 395,2 |
| Schuß | 458,5 | 377,6 |

### Beispiel 5

Beispiel 4 wurde wiederholt, wobei, abweichend von diesem Beispiel, ein Garn mit einem Titer 350 f 72 (Garntiter 350 dtex, Filamentzahl 72) zum Einsatz kam. Der Heißluftschrumpf betrug bei dem hier eingesetzten Garn 6.7 % (gemessen bei 190 °C). Entsprechend dem geringeren Garntiter kam mit 25/cm eine höhere Fadenzahl zum Einsatz. Die restlichen Verfahrensdaten entsprachen denen von Beispiel 1 bzw. Beispiel 4.

Hierbei wurde ein Gewebe mit einer Luftdurchlässigkeit von 4,6 l/dm²•min erhalten. Nach dem Alterungstest und nach der Klimatisierung lag die Luftdurchlässigkeit bei 4,9 l/dm²•min. Alle genannten Werte wurden bei 500 Pa Prüfdifferenzdruck ermittelt.

Bezüglich der restlichen Gewebedaten ergibt sich auch hier ein ähnliches Bild wie bei den anderen Versuchen:

| | Ausgangswert | Nach Alterung und Klimatisierung |
|---|---|---|
| Fadenzahl/cm | | |
| Kette | 25,6 | 25,8 |
| Schuß | 24,6 | 24,8 |
| | | |
| Flächengewicht | | |
| g/m² | 206,8 | 204,5 |
| | | |
| Gewebedicke mm | 0,322 | 0,317 |
| | | |
| Höchstzugkraft N | | |
| Kette | 2859 | 2795 |
| Schuß | 2096 | 2097 |
| | | |
| Höchstzugkraftdehnung % | | |
| Kette | 43,0 | 42,5 |
| Schuß | 27,5 | 27,7 |
| | | |
| Weiterreißfestigkeit N (Trapezmethode) | | |
| Kette | 363,9 | 293,5 |
| Schuß | 302,2 | 257,4 |

### Beispiel 6

Mit Beispiel 6 erfolgte eine weitere Wiederholung von Beispiel 4, dieses Mal nun mit einem Garn mit Titer 235 f 36 (Garntiter 235 dtex, Filamentzahl 36). Der Heißluftschrumpf betrug bei dem hier eingesetzten Garn 6.4 % (gemessen bei 190°C). Entsprechend dem geringeren Garntiter kam mit 30/cm eine höhere Fadenzahl zum Einsatz. Die restlichen Verfahrensdaten entsprachen denen von Beispiel 1 bzw. Beispiel 4.

Hierbei wurde ein Gewebe mit einer Luftdurchlässigkeit von 7,4 l/dm²•min erhalten. Nach dem Alterungstest und nach der Klimatisierung lag die Luftdurchlässigkeit bei 7,5 l/dm²•min. Alle genannten Werte wurden bei 500 Pa Prüfdifferenzdruck ermittelt.

Bezüglich der restlichen Gewebedaten ergibt sich auch hier ein ähnliches Bild wie bei den anderen Versuchen:

| | Ausgangswert | Nach Alterung und Klimatisierung |
|---|---|---|
| Fadenzahl/cm | | |
| Kette | 30,8 | 30,8 |
| Schuß | 29,1 | 29,1 |
| | | |
| Flächengewicht | | |
| g/m² | 165,7 | 165,3 |
| | | |
| Gewebedicke mm | 0,258 | 0,250 |
| | | |
| Höchstzugkraft N | | |
| Kette | 2075 | 2089 |
| Schuß | 1945 | 1993 |
| | | |
| Höchstzugkraftdehnung % | | |
| Kette | 39,6 | 40,2 |
| Schuß | 29,7 | 30,4 |
| | | |
| Weiterreißfestigkeit N (Trapezmethode) | | |
| Kette | 251,0 | 212,7 |
| Schuß | 224,6 | 185,2 |

### Beispiel 7

Dieses Beispiel beschreibt die Herstellung von Filtergeweben für Airbags aus Polyester-Filamentgarnen nach dem erfindungsgemäßen Verfahren.

Polyester-Filamentgarn mit einem Titer 550 f 96 wurde in Leinwandbindung zu einem Gewebe verarbeitet. Das eingesetzte Garn hatte einen Heißluftschrumpf von 2,7 % (gemessen bei 190 °C). Die Fadenzahl betrug sowohl in der Kette als auch im Schuß 16/cm.

Das so hergestellte Gewebe wurde anschließend einer Naßbehandlung auf einem Jigger bei 95 °C unterzogen. Auf dem Jigger wurden sechs Behandlungspassagen gefahren.

Die Kaule des auf dem Jigger behandelten aufgewickelten Gewebes wurde einem Zylindertrockner vorgelegt und auf diesem bei 150 °C getrocknet. Anschließend erfolgte eine Fixierung auf einem Spannrahmen bei 190 °C. Die Voreilung beim Einlauf in den Spannrahmen betrug 3 %.

Das den Spannrahmen verlaßende Gewebe wurde in gleicher Weise wie in Beispiel 1 abgekühlt, das heißt ohne Betätigung des Kühlgebläses am Spannrahmenausgang durch Fahren über Tänzerwalzen bei Raumtemperatur (ca. 25 °C). Das Aufwickeln erfolgte auch hier mit geringer Spannung.

Das so hergestellte Gewebe zeigte eine Luftdurchlässigkeit von 43 l/dm²•min bei 500 Pa Prüfdifferenzdruck.

Anschließend wurde das Gewebe dem beschriebenen dreistufigen Alterungsprozeß unterzogen. Nach der Gesamtbehandlungszeit und nach der Klimatisierung wurde eine Luftdurchlässigkeit von 44 l/dm²•min ermittelt. Die Messung der Luftdurchlässigkeit erfolgte in allen Fällen bei 500 Pa Prüfdifferenzdruck.

## Patentansprüche

1. Verfahren zur Herstellung von Technischen Geweben aus Synthesefilamentgarnen mit sehr guter Alterungsbeständigkeit und durch Auswahl der Heißluftschrumpfwerte des Garnes und auf den Garntiter abgestimmter Fadenzahlen gezielt eingestellter Gewebe-Luftdurchlässigkeit in einem Bereich < 120 l/dm²•min, gemessen bei 500 Pa Prüfdifferenzdruck, wobei als erste Stufe eine Naßbehandlung des Gewebes in einem wäßrigen Bad bei 60 - 140 °C durchgeführt wird und nach dieser Naßbehandlung mit jeweils auf die Faserart abgestimmten spezifischen Bedingungen ein- oder zweistufig in Heißluft behandelt wird, wobei die letzte Heißluftbehandlung jeweils auf einem Spannrahmen erfolgt, dadurch gekennzeichnet, daß nach der Spannrahmenbehandlung ohne Zuhilfenahme von beispielsweise einem Gebläse langsam abgekühlt und bei einer Spannung von 150 bis 300 N/m Gewebebreite aufgewickelt wird, wonach die gewünschte Gewebe-Luftdurchlässigkeit bei guter Alterungsbeständigkeit eingestellt ist.

2. Verfahren zur Herstellung von Technischen Geweben aus Polyamid-Filamentgarnen nach Anspruch 1, dadurch gekennzeichnet, daß nach der Naßbehandlung mit einer Voreilung von 3 - 5 % in einen Spannrahmen eingefahren und im Spannrahmen bei maximal 150 °C getrocknet wird, wobei die Trocknungs- und Abkühlungsbedingungen so eingestellt werden, daß das Gewebe beim Aufwickeln eine Feuchtigkeit von ca. 5 % aufweist.

3. Verfahren zur Herstellung von Technischen Geweben aus Polyester-Filamentgarnen nach Anspruch 1, dadurch gekennzeichnet, daß nach der Naßbehandlung getrocknet und anschließend in einem Spannrahmen bei ca. 190 °C fixiert wird.

4. Technisches Gewebe mit gezielt eingestellter Luftdurchlässigkeit in einem Bereich von < 120 l/dm²•min, gemessen bei 500 Pa Prüfdifferenzdruck, hergestellt nach den Verfahren gemäß mindestens einem der Ansprüche 1 bis 3, dadurch gekennzeichnet, daß sich der Wert der Luftdurchlässigkeit beim Alterungstest mit einer Temperaturzyklusbehandlung in einem Temperaturbereich zwischen -35 °C und 105 °C sowie bei einer Luftfeuchtigkeitszyklusbehandlung zwischen 30 und 95 % relativer Luftfeuchtigkeit um nicht mehr als 15 % vom Ausgangswert verändert.

5. Verwendung eines Gewebes nach Anspruch 4 für Artikel, bei denen eine gezielt eingestellte Luftdurchlässigkeit bei sehr guter Alterungsbeständigkeit erforderlich ist.

6. Verwendung eines Gewebes nach Anspruch 4 zur Herstellung des Filterteils eines Airbags.

7. Verwendung eines Gewebes nach Anspruch 4 zur Herstellung des Kontaktteils eines Airbags.

8. Airbag, gekennzeichnet durch mindestens ein Filtergewebe oder mindestens ein Kontaktgewebe nach Anspruch 4.

9. Airbag-System, gekennzeichnet durch einen Airbag nach Anspruch 8.

## Claims

1. Process for the production of industrial wovens of synthetic filament yarns having a very good resistance to ageing and a permeability of the woven to air, established in a controlled manner by choice of the hot air shrinkage values of the yarn and of the thread counts appropriate for the yarn titre, in a range of < 120 l/dm²•min, measured under a test pressure difference of 500 Pa, wherein a wet treatment of the woven in an aqueous bath at 60 - 140°C is carried out as the first stage and, after this wet treatment, a treatment in hot air in one or two stages is carried out under in each case the specific conditions appropriate for the type of fibre, the last hot air treatment in each case being carried out on a stenter frame, characterized in that after the stenter frame treatment the woven is cooled slowly without the aid of, for example, a fan and is wound up under a tension of 150 to 300 N/m woven width, after which the desired permeability of the woven to air coupled with good resistance to ageing is established.

2. Process for the production of industrial wovens from polyamide filament yarns according to claim 1, characterized in that after the wet treatment the woven is fed with a lead of 3 - 5% into a stenter frame and dried in the stenter frame at a maximum of 150°C, the drying and cooling conditions being set such that the woven has a moisture content of approx. 5% during winding up.

3. Process for the production of industrial wovens of polyester filament yarns according to claim 1, characterized in that after the wet treatment the woven is dried and then fixing is carried out in a stenter frame at approx. 190°C.

4. Industrial woven having a permeability to air, established in a controlled manner, in a range of < 120 l/dm²•min, measured under a test pressure difference of 500 Pa, produced by the processes according to at least one of claims 1 to 3, characterized in that the value of the permeability to air in the ageing test with a temperature cycle treatment in a temperature range between -35°C and 105°C and under an atmospheric humidity cycle treatment between 30 and 95% relative atmospheric humidity changes from the starting value by not more than 15%.

5. Use of a woven according to claim 4 for articles with which a permeability to air established in a controlled manner, coupled with a very good resistance to ageing, is necessary.

6. Use of a woven according to claim 4 for the production of the filter part of an airbag.

7. Use of a woven according to claim 4 for the production of the contact part of an airbag.

8. Airbag, characterized by at least a filter woven or at least a contact woven according to claim 4.

9. Airbag system, characterized by an airbag according to claim 8.

## Revendications

1. Procédé pour la fabrication de textiles techniques en fils de filaments synthétiques, présentant une très bonne résistance au vieillissement et une perméabilité à l'air du tissu ajustée de manière contrôlée dans une plage < 120 l/dm²•min, mesurée sous une pression différentielle d'essai de 500 Pa, par sélection des valeurs de retrait à l'air chaud du fil et du nombre de fils, adapté au titre du fil, dans lequel, comme première étape, on effectue un traitement par voie humide du tissu dans un bain aqueux à 60 - 140° C, et après ce traitement par voie humide, on traite, à l'air chaud en une ou deux étapes dans des conditions spécifiques adaptées au type de fibre, le dernier traitement à l'air chaud s'effectuant chaque fois sur un cadre tendeur, caractérisé en ce qu'après le traitement au cadre tendeur, on refroidit lentement sans recourir par exemple à un ventilateur, et on bobine sous une tension de 150 à 300 N/m de largeur de tissu, suite à quoi la perméabilité souhaitée du tissu à l'air est atteinte, tout en obtenant une bonne résistance au vieillissement.

2. Procédé pour la fabrication de textiles techniques en fils de filaments de polyamide selon la revendication 1, caractérisé en ce qu'après le traitement par voie humide, on l'introduit avec une avance de 3 - 5% dans un cadre tendeur, et on sèche à au plus 150° C dans le cadre tendeur, les conditions de séchage et de refroidissement étant réglées de telle sorte que, lors du bobinage, le tissu présente une humidité d'environ 5%.

3. Procédé pour la fabrication de textiles techniques en fils de filaments de polyester selon la revendication 1, caractérisé en ce que, après le traitement par voie humide, on sèche et ensuite on fixe dans un cadre tendeur à environ 190° C.

4. Textile technique dont la perméabilité à l'air est ajustée de manière contrôlée dans une plage < 120 l/dm²•min, mesurée sous une pression différentielle de 500 Pa, fabriqué par le procédé selon au moins l'une des revendications 1 à 3, caractérisé en ce que la valeur de la perméabilité à l'air ne varie pas de plus de 15% par rapport à la valeur de départ lors d'un essai de vieillissement par un traitement par cycles de température dans une plage de température comprise entre - 35° C et 105° C et lors d'un traitement par cycles d'humidité de l'air entre 30 et 95% d'humidité relative de l'air.

5. Utilisation d'un tissu selon la revendication 4 pour des objets pour lesquels il faut une perméabilité ajustée de manière contrôlée à l'air ainsi qu'une très bonne résistance au vieillissement.

6. Utilisation d'un tissu selon la revendication 4 pour la fabrication de la partie de filtre d'un coussin gonflable de sécurité.

7. Utilisation d'un tissu selon la revendication 4 pour la fabrication de la partie de contact d'un coussin gonflable de sécurité.

8. Coussin gonflable de sécurité, caractérisé par au moins un tissu de filtre ou au moins un tissu de contact selon la revendication 4.

9. Système à coussin gonflable de sécurité, caractérisé par un coussin gonflable de sécurité selon la revendication 8.
